# EUROPEAN PATENT APPLICATION

(11) **EP 4 462 770 A1**
(43) Date of publication of application: **13.11.2024**
(21) Application number: 22918679.6
(22) Date of filing: 19.05.2022
(51) Int. Cl.: H04N 7/18, G06T 7/20, G06T 7/292

(54) **DATA ANALYSIS DEVICE AND METHOD**

(30) Priority: 07.01.2022 JP 2022001723
(71) Applicant: Panasonic Intellectual Property Management Co., Ltd., Kadoma-shi, Osaka 571-0057 (JP)
(72) Inventor: ICHIMURA, Daijiroh, Kadoma-shi, Osaka 571-0057 (JP); SHIN, Hidehiko, Kadoma-shi, Osaka 571-0057 (JP); ITOH, Tomoaki, Kadoma-shi, Osaka 571-0057 (JP)
(74) Representative: Grünecker Patent- und Rechtsanwälte PartG mbB
(86) International application number: PCT/JP2022/020780
(87) International publication number: WO 2023/132090

(57) **Abstract**

A data analysis device (2) according to the present disclosure controls generation of a data string indicating a detection result of an object detected in time sequence in a field. The data analysis device includes a display (23) configured to display information, an input interface (22) configured to receive a user operation, and a processor (20) configured to control a data controller that manages the detection result of the object to generate the data string. The processor is configured to cause (S1) the display to display display information including an adjacency range in which ends of a plurality of fragments of the data string are adjacent to each other in the field, receive (S3), via the input interface, the user operation to adjust a parameter indicating a condition for the plurality of fragments of the data string to be connected to each other in the adjacency range, and control (S4) the data controller to apply the adjusted parameter in the adjacency range according to the user operation on the input interface.

## Description

### TECHNICAL FIELD

The present disclosure relates to a data analysis device and a method thereof.

### BACKGROUND ART

Patent document 1 discloses a video analysis device that tracks a person from continuous image frames taken by a camera. This video analysis device detects a person area in each image frame to output a score, outputs a score for a change in the person area between each set of two image frames, recognizes an actual person from each person area to output a score, and outputs a score for a change in the person recognition in the person area. The video analysis device assigns a trajectory ID and links a person ID to each person area in the image frames using all the scores. This allows person tracking to continue robustly in the event of inter-person occlusion.

### Patent Document

Patent Document 1: JP 2020-09166 A

### SUMMARY

The present disclosure provides a data analysis device capable of facilitating to suppress the occurrence of discontinuity in a data string of an object detected in time sequence in a field.

A data analysis device according to the present disclosure controls generation of a data string indicating a detection result of an object detected in time sequence in a field. The data analysis device includes a display configured to display information, an input interface configured to receive a user operation, and a processor configured to control a data controller that manages the detection result of the object to generate the data string. The processor is configured to cause the display to display display information including an adjacency range in which ends of a plurality of fragments of the data string are adjacent to each other in the field, receive, via the input interface, the user operation to adjust a parameter indicating a condition for the plurality of fragments of the data string to be connected to each other in the adjacency range, and control the data controller to apply the adjusted parameter in the adjacency range according to the user operation on the input interface.

These general and specific aspects may be implemented by a system, a method, and a computer program, and a combination thereof.

A data analysis device according to the present disclosure can facilitate to suppress the occurrence of discontinuity in a data string of an object detected in time sequence in a field.

### BRIEF DESCRIPTION OF DRAWINGS

Fig. 1 is a diagram illustrating an overview of a trajectory analysis system according to a first embodiment of the present disclosure;
Fig. 2 is a block diagram illustrating a configuration of a data analysis device in the trajectory analysis system;
Fig. 3 is a block diagram illustrating a configuration of a trajectory management server in the trajectory analysis system;
Figs. 4A to 4C are diagrams for describing discontinuity of a trajectory in the trajectory analysis system;
Fig. 5 is a flowchart illustrating operation of the data analysis device in the trajectory analysis system;
Fig. 6 is a flowchart illustrating a discontinuity visualization process in the data analysis device;
Figs. 7A and 7B are diagrams illustrating display examples of a trajectory analysis screen in the data analysis device;
Fig. 8 is a diagram illustrating a display example of detailed information in the data analysis device;
Fig. 9 is a flowchart illustrating a parameter adjustment process in the data analysis device;
Fig. 10 is a table illustrating a discontinuity pattern table in the data analysis device;
Figs. 11A to 11C are diagrams illustrating display examples of the parameter adjustment process in the data analysis device;
Fig. 12 is a table illustrating parameter adjustment information in the data analysis device; and
Figs. 13A and 13B are diagrams for describing a modification example of the data analysis device.

### DETAILED DESCRIPTION

Hereinafter, embodiments will be described in detail with reference to the drawings as appropriate. However, more detailed description than necessary may be omitted. For example, detailed descriptions of already well-known matters and duplicate descriptions for substantially the same configuration may be omitted. This is to avoid unnecessary redundancy of the following description and to facilitate the understanding of those skilled in the art.

It should be noted that the applicant(s) provides the accompanying drawings and the following description in order that those skilled in the art fully understand the present disclosure, and does not intend the provided drawings and description limit the subject matter described in the claims.

### (First Embodiment)

A first embodiment of the present disclosure will be described below with reference to the drawings.

### 1. Configuration

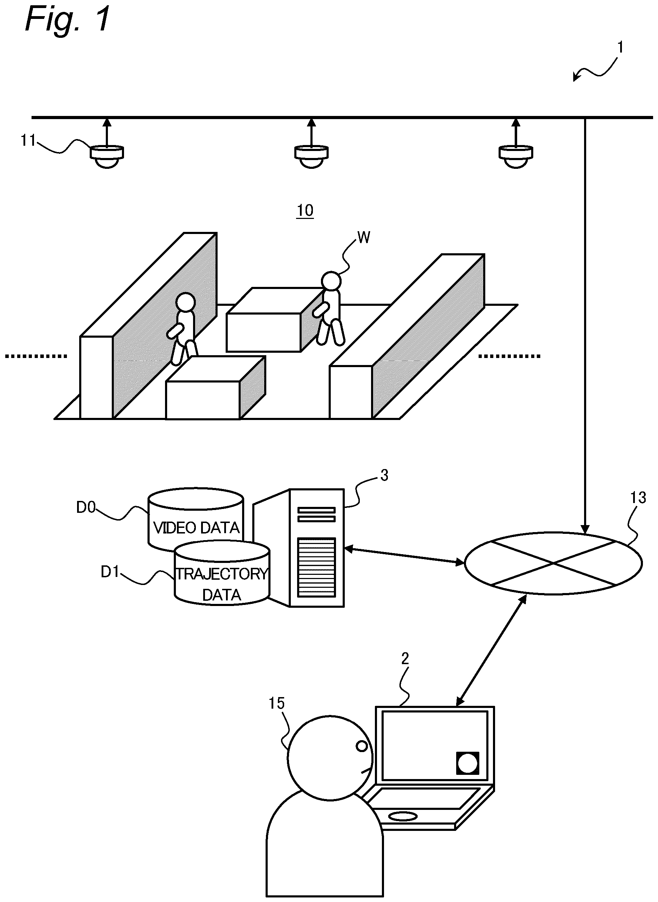

A configuration of a system using a data analysis device according to the first embodiment will be described with reference to Fig. 1.

### 1-1. Trajectory Analysis System

Fig. 1 illustrates an overview of a trajectory analysis system 1 according to the present embodiment. For example, as illustrated in Fig. 1, the system 1 includes a plurality of cameras 11, a data analysis device 2, and a trajectory management server 3. The respective devices 11, 2, and 3 of the system 1 are connected to a communication network 13 such as a local area network (LAN), a wide area network (WAN), or the Internet, and can perform data communication.

In a field such as a workplace 10 where one or more workers W work in a factory, a distribution warehouse, a store, or the like, the system 1 accumulates information for analysis, such as a trajectory that is a locus along which each worker W has moved. The system 1 is applicable to data analysis in which a user 15 such as an administrator of the workplace 10 or a person responsible for the analysis analyzes time allocation, efficiency, or the like of each worker W who has worked in the workplace 10.

In the data analysis as described above, it is useful to obtain a trajectory of each worker W continuously from the beginning to the end without discontinuity. The data analysis device 2 of the present embodiment can easily obtain a continuous trajectory with the occurrence of discontinuity suppressed in the trajectory analysis system 1 by reflecting an analysis result from the user 15.

In the system 1, the cameras 11 are disposed such that respective captured images include ranges different from each other in the workplace 10, for example. The number of cameras 11 in the system 1 is not particularly limited to multiple, and may be one. The camera 11 is communicatively connected to the trajectory management server 3 via the communication network 13, for example, so as to be able to transmit video data D0 of an imaging result of the workplace 10. The cameras 11 may be omnidirectional cameras, box cameras, or the like.

The trajectory management server 3 is a server device that accumulates and manages information such as the video data D0 of imaging results from the respective cameras 11 and trajectory data D1 indicating various trajectories based on the video data D0. A configuration of the trajectory management server 3 will be described later.

### 1-2. Configuration of Data Analysis Device

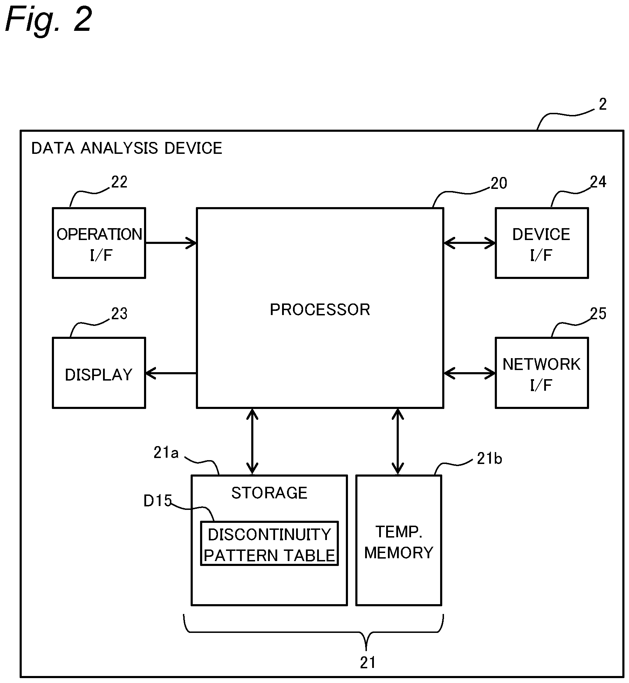

The data analysis device 2 according to the present embodiment presents information to be used for analysis by the user 15 from the accumulated information such as the video data D0 and the trajectory data D1 in the system 1. The data analysis device 2 includes an information processing device such as a personal computer (PC). A configuration of the data analysis device 2 will be described with reference to Fig. 2.

Fig. 2 is a block diagram illustrating the configuration of the data analysis device 2. The data analysis device 2 illustrated in Fig. 2 includes a processor 20, a memory 21, an operation interface 22, a display 23, a device interface 24, and a network interface 25. Hereinafter, an interface may be abbreviated as an "I/F".

The processor 20 includes a central processing unit (CPU) or a microprocessor unit (MPU) that cooperates with software to implement predetermined functions. The processor 20 controls the overall operation of the data analysis device 2, for example. The processor 20 reads the data and the programs stored in the memory 21, and performs various operation processing to implement various functions.

For example, the processor 20 executes a program including a command set for executing the various functions. The above programs may be provided from the communication network 13 or may be stored in a portable recording medium. The processor 20 may be a hardware circuit such as a dedicated electronic circuit or a reconfigurable electronic circuit designed to perform the various functions. The processor 20 may be configured with various semiconductor integrated circuits such as a CPU, an MPU, a graphics processing unit (GPU), a general purpose graphics processing unit (GPGPU), a tensor processing unit (TPU), a microcomputer, a digital signal processor (DSP), a field-programmable grid array (FPGA) and an application specific integrated circuit (ASIC).

The memory 21 is a storage medium that stores programs and data necessary for implementing the functions of the data analysis device 2. As illustrated in Fig. 2, the memory 21 includes a storage 21a and a temporary memory 21b.

The storage 21a stores parameters, data, control programs, and the like for achieving predetermined functions. The storage 21a includes a hard disk drive (HDD) or a solid state disk (SSD). For example, the storage 21a stores the above programs, a discontinuity pattern table D10, and the like. The discontinuity pattern table D10 is an example of pattern information including patterns of factors which are presumed in advance to cause discontinuity of a trajectory 40 as described later.

The temporary memory 21b includes a random access memory (RAM) such as a dynamic RAM (DRAM) or a static RAM (SRAM), and temporarily stores (i.e., holds) data. For example, the temporary memory 21b holds the trajectory data D1, the video data D0, and the like received from the trajectory management server 3 (Fig. 1). In addition, the temporary memory 21b may function as a work area of the processor 20, and may be configured with a storage area in an internal memory of the processor 20.

The operation interface 22 is a general term of an operation member operated by a user. The operation interface 22 may be a keyboard, a mouse, a touch pad, a touch panel, a button, a switch, or the like. The operation interface 22 may include a virtual operation member such as various buttons or a pointer displayed on the display 23. The operation interface 22 is an example of an input interface that acquires various information input by a user operation.

The display 23 is an example of an output interface configured with, a liquid crystal display or an organic electroluminescence (EL) display, for example. The display 23 may display various information such as the virtual operation member of the operation interface 22 and information input from the operation interface 22.

The device I/F 24 is a circuit for connecting an external device to the data analysis device 2. The device I/F 24 is an example of a communication interface that performs communication according to a predetermined communication standard. The predetermined standard includes Universal Serial Bus (USB), High-Definition Multimedia Interface (HDMI: registered trademark), Institute of Electrical and Electronic Engineers (IEEE) 1394, WiFi, Bluetooth, and the like. In the data analysis device 2, the device I/F 24 may constitute an input interface that receives various information from the external device or an output interface that transmits various information to the external device.

The network I/F 25 is a circuit for connecting the data analysis device 2 to the communication network 13 via a wireless or wired communication line. The network I/F 25 is an example of a communication interface that performs communication according to a predetermined communication standard. The predetermined communication standard includes communication standards such as IEEE 802.3 and IEEE 802.11a/11b/11g/11ac. The network I/F 25 may constitute an input interface that receives various information or an output interface that transmits various information via the communication network 13 in the data analysis device 2.

The configuration of the data analysis device 2 as described above is an example, and the configuration of the data analysis device 2 is not limited thereto. For example, the data analysis device 2 may include various computers including a server device. The data analysis device 2 may be configured integrally with the trajectory management server 3.

In addition, the input interface in the data analysis device 2 may be implemented by cooperation with various software in the processor 20 or the like. The input interface in the data analysis device 2 may acquire various information by reading various information stored in various storage media (e.g., the storage 21a) to a work area (e.g., the temporary memory 21b) of the processor 20.

Further, various display devices such as a projector and a head mount display may be used as the display 23 of the data analysis device 2. For example, in a case where an external display device is used, the display 23 of the data analysis device 2 may be an output interface circuit for video signals or the like conforming to the HDMI (registered trademark) standard or the like.

### 1-3. Configuration of Trajectory Management Server

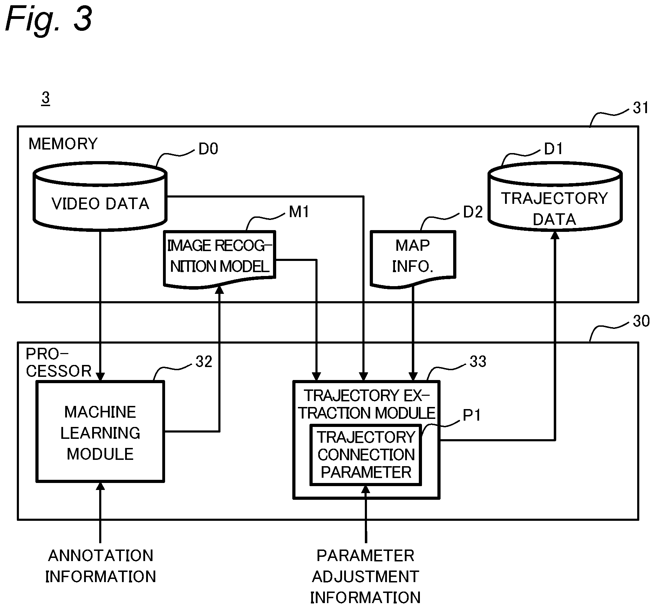

A configuration of the trajectory management server 3 in the present embodiment will be described with reference to Fig. 3. The trajectory management server 3 is an example of a data controller in the present embodiment.

Fig. 3 is a block diagram illustrating the configuration of the trajectory management server 3 in the system 1. For example, as illustrated in Fig. 3, the trajectory management server 3 includes a processor 30 and a memory 31. The trajectory management server 3 further includes an interface circuit (not shown) communicatively connected to the cameras 11 and the data analysis device 2 via the communication network 13 (Fig. 1), for example.

In the trajectory management server 3, the processor 30 includes a CPU or an MPU that cooperates with software to implement predetermined functions, for example, and executes operation processing of a program or the like including a command set for implementing the various functions. For example, the processor 30 includes a machine learning module 32 and a trajectory extraction module 33 as a functional configuration.

The processor 30 may be a hardware circuit such as a dedicated electronic circuit or a reconfigurable electronic circuit designed to perform the various functions. The processor 30 may be configured with various semiconductor integrated circuits such as a CPU, an MPU, a GPU, a GPGPU, a TPU, a microcomputer, a DSP, an FPGA, and an ASIC.

The memory 31 is a storage medium that stores programs and data necessary for implementing the functions of the trajectory management server 3, and includes an HDD, an SSD, or the like. The memory 31 may include a RAM such as a DRAM or an SRAM, and may function as a work area of the processor 30. For example, the memory 31 stores the video data D0, the trajectory data D1, an image recognition model M1, map information D2, and the like. The map information D2 indicates the layout of facilities and the like in the workplace 10 in a predetermined coordinate system (hereinafter, also referred to as "map coordinates").

The machine learning module 32 performs machine learning on the image recognition model M1 on the basis of teacher data including the video data D0 obtained in advance by capturing an image of the workplace 10 and annotation information regarding the image, for example. The machine learning module 32 stores the trained image recognition model M1 in the memory 31.

The annotation information is information on whether or not an object to be detected by the image recognition, such as a worker W, appears in the image, the position of the object on the image, and the like, which is specified in advance by manual input from the user 15 or the like. The annotation information may be appropriately stored in the memory 31 at the time of training the image recognition model M1 or the like. In the system 1, the data analysis device 2 may further have a function of setting the annotation information.

The image recognition model M1 is constructed by machine learning such that, when an image of a frame of the video data D0 or the like is input, the position of the object such as the worker W in the input image is detected as an output. As the image recognition model M1, various machine learning models such as a convolutional neural network can be adopted. The image recognition model M1 may detect a type of the object appearing in the input image. For example, when a plurality of tasks set in advance are performed by respective workers W, the workers W may be detected as different types of objects or may be personally identified.

On the basis of the video data D0, the image recognition model M1, and the map information D2, the trajectory extraction module 33 extracts a trajectory of the object from a result of the image recognition model M1 having sequentially detected the object in the video data D0, and generates trajectory data D1 that can be managed in the map coordinates. In the present embodiment, the trajectory extraction module 33 may be an example of the data controller. The trajectory data D1 indicates the trajectory as an example of a data string formed by sequentially connecting the positions detected by the image recognition model M1 in different frames.

The trajectory extraction module 33 has a parameter, namely, a trajectory connection parameter P1 for connecting the positions detected by the image recognition model M1 in the different frames to each other when the trajectory is extracted, for example. The trajectory connection parameter P1 indicates a condition, namely, a connection condition defining a range in which a detected position is allowed as a connection destination from another detected position as a connection source, for example, and includes a distance range from the connection source to the connection destination, a connection direction, waiting time, and the like. Fragments of the trajectory having the detected positions at their ends can be connected to each other by connecting the detected positions to each other.

The system 1 is configured such that the trajectory connection parameter P1 in the trajectory management server 3 can be adjusted by a user operation in the data analysis device 2. The trajectory connection parameter P1 can be set to respective values for different areas in the map coordinates based on the map information D2 or camera coordinates corresponding to the image captured by the camera 11. Setting information indicating the various settings of the trajectory connection parameter P1 is stored in the memory 31, for example.

The configuration of the trajectory management server 3 in the system 1 as described above is an example, and the configuration of the system 1 is not limited thereto. The various functions of the trajectory management server 3 of the present embodiment may be implemented in distributed computing. In addition, the trajectory management server 3, and by extension the system 1, may not include the machine learning module 32.

The trajectory extraction module 33 may extract the trajectory by machine learning. The trajectory extraction module 33 may extract the trajectory by machine learning, and various parameters related to the machine learning may be adjustable in the data analysis device 2. Further, the image recognition model M1 may be constructed not only by machine learning but also by implementing various image recognition algorithms.

### 2. Operation

Operation of the trajectory analysis system 1 and the data analysis device 2 configured as described above will be described below.

### 2-1. System Operation

An example of operation to automatically extract a trajectory of the worker W using the trained image recognition model M1 in the trajectory analysis system 1 (Fig. 1) of the present embodiment will be described. For example, in the system 1, the plurality of cameras 11 sequentially capture images frame-by-frame of respective imaging ranges in the workplace 10, and transmit the video data D0 of the imaging results to the trajectory management server 3.

When receiving the video data D0 from the cameras 11, the trajectory management server 3 stores the video data D0 in the memory 31 and inputs the video data D0 to the trajectory extraction module 33. The trajectory extraction module 33 uses the trained image recognition model M1 to detect the positions of the worker W in the captured images frame-by-frame indicated by the input video data D0. For example, the trajectory extraction module 33 specifies a detected position as a connection source and a detected position as a connection destination for the connection source between a plurality of detected positions in different frames according to the trajectory connection parameter P1 set in advance, and extracts a trajectory such that the specified detected positions are sequentially connected. The trajectory extraction module 33 generates trajectory data D1 indicating the extracted trajectory, and stores the trajectory data D1 in the memory 31.

The data analysis device 2 performs data communication with the trajectory management server 3, and receives various information from the trajectory management server 3 in accordance with an operation by the user 15, for example. The data analysis device 2 generates various information to be used by the user 15 for analysis in the workplace 10 and the like on the basis of the information acquired as described above, and displays the various information on the display 23.

### 2-1-1. Discontinuity of Trajectory

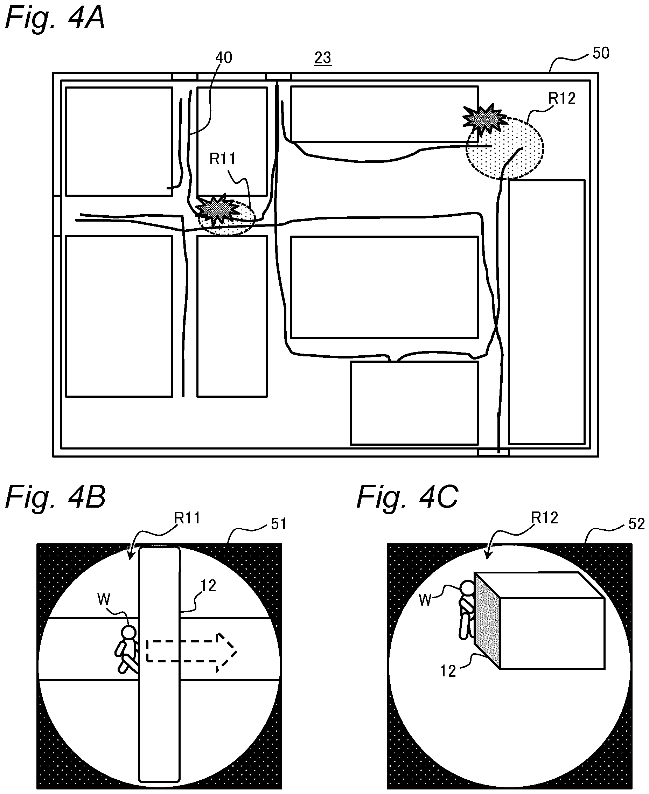

In the automatic trajectory extraction as described above, there may be a problem that a trajectory that is originally continuous is discontinuously extracted due to various factors in the workplace 10. The inventors of the present application has intensively studied to appropriately adjust the trajectory connection parameter P1 in order to eliminate such discontinuity of a trajectory, and contrived the data analysis device 2 of the present embodiment. Such findings will be described with reference to Figs. 4A to 4C.

Figs. 4A to 4C are diagrams for describing discontinuity of a trajectory 40 in the system 1. Fig. 4A illustrates areas, namely, discontinuity areas R11 and R12 where discontinuity has occurred in the trajectory 40 of the trajectory data D1 on a workplace map 50 indicated by the map information D2 of the workplace 10. Fig. 4B illustrates a captured image 51 of a first discontinuity area R11 in the video data D0. Fig. 4C illustrates a captured image 52 of a second discontinuity area R12.

In the first discontinuity area R11 illustrated in Figs. 4A and 4B, the captured image 51 by the camera 11 shows an obstacle 12 such as a ceiling beam superimposed on a passage through which the worker W passes in the workplace 10. In the discontinuity area R11, the worker W moving through the passage passes behind the obstacle 12 as viewed from the camera 11. Then, it is anticipated that the worker W is not detected by the image recognition model M1 and discontinuity occurs in a resulting extracted trajectory 40. In this case, it is considered that the discontinuity of the trajectory 40 can be eliminated by using, as a trajectory connection direction, a destination direction in which the worker W is predicted to move along the passage after the discontinuity of the trajectory 40.

In the second discontinuity area R12 illustrated in Figs. 4A and 4C, the captured image 52 shows an obstacle 12 superimposed on a place at which the worker W works in the workplace 10. In the discontinuity area R12, when the worker W works behind the obstacle 12 as viewed from the camera 11, it is anticipated that the worker W is not detected and discontinuity occurs in the trajectory 40. In this case, the worker W behind the obstacle 12 is predicted to appear again in the vicinity of the obstacle 12 in the captured image 52 after the work. It is considered that the discontinuity of the trajectory 40 can be eliminated by reflecting such prediction in adjusting the trajectory connection parameter P1.

The inventors have focused on the fact that, while using an AI technology or the like to implement analysis of the various situations in which discontinuity occurs in the trajectory 40 as described above will be rather difficult, the user 15 of the system 1 can specifically identify a factor of discontinuity or the like by viewing a current situation of the workplace 10. Therefore, the data analysis device 2 of the present embodiment provides a user interface capable of visualizing the discontinuity situations of a trajectory 40 for the user 15 and adjusting the trajectory connection parameter P1 with reflecting analysis performed by the user 15. Hereinafter, details of the operation of the data analysis device 2 of the present embodiment will be described.

### 2-2. Operation of Data Analysis Device

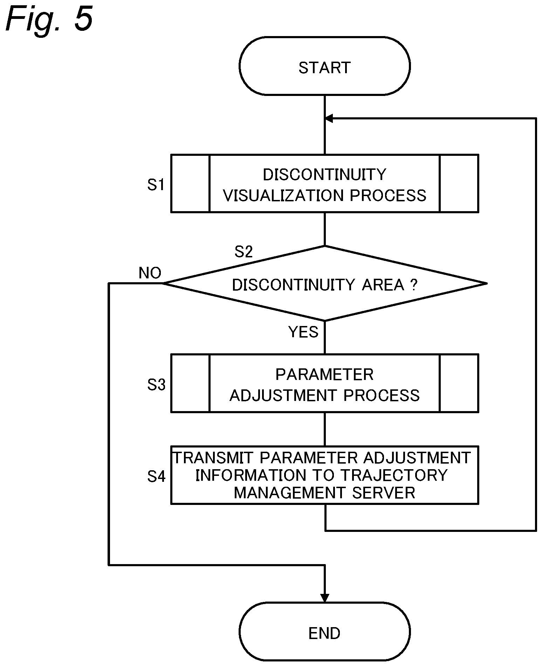

The overall operation of the data analysis device 2 of the present embodiment will be described with reference to Fig. 5.

Fig. 5 is a flowchart illustrating the operation of the data analysis device 2 in the system 1. Each process of the flowchart illustrated in Fig. 5 is executed by the processor 20 of the data analysis device 2, for example. The processing of this flow starts with the trajectory data D1 obtained from the video data D0 of the imaging results from the cameras 11 using the trained image recognition model M1 and the trajectory connection parameter P1 set in advance in the trajectory management server 3, for example.

First, the processor 20 of the data analysis device 2 performs a process to visualize a discontinuity situation of a trajectory 40 in the workplace 10 for the user 15 on the display 23, based on the current trajectory data D1 generated in the trajectory management server 3 (S1). In the discontinuity visualization process (S1), as illustrated in Figs. 4A to 4C, various display information regarding the discontinuity areas R11 and R12 of the trajectory 40 in the workplace 10 is presented to the user 15, for example. Details of the discontinuity visualization process (S1) will be described later. Hereinafter, the discontinuity areas R11 and R12 are generically referred to as a discontinuity area R1.

The user 15 checks the various display information visualized in step S1. When a discontinuity area R1 is present, for which the trajectory connection parameter P1 is to be adjusted, the user 15 can input an operation of designating the discontinuity area R1 to the operation interface 22. The processor 20 determines whether or not the discontinuity area R1 is designated on the basis of the user operation input to the operation interface 22 (S2).

When the discontinuity area R1 is designated by the input user operation (YES in S2), the processor 20 performs a process of responding to a user operation of adjusting the trajectory connection parameter P1 for the designated discontinuity area R1 (S3). In the parameter adjustment process (S3), various information that guides the user 15 is presented in order to adjust the trajectory connection parameter P1 with appropriately reflecting a specified situation in the discontinuity area R1 designated by the user 15 (S3). Details of the parameter adjustment process (S3) will be described later.

Next, the processor 20 transmits, to the trajectory management server 3, parameter adjustment information including the trajectory connection parameter P1 that is an adjustment result of the parameter adjustment process (S3) for the discontinuity area R1 designated by the user 15, for example (S4). Then, the processor 20 performs the processes of step S1 and subsequent steps again, for example. For example, the discontinuity visualization process (S1) at this time is performed using the trajectory data D1 in which the trajectory 40 is re-extracted by reflecting the adjustment result of step S3 in the trajectory management server 3. For example, the user 15 can check the adjustment result of step S3 in subsequent step S1 to repeatedly perform the parameter adjustment process (S3) until no discontinuity area R is present.

When no discontinuity area R1 is designated by the input user operation (NO in S2), the processor 20 ends the processing illustrated in this flowchart.

According to the above processing, the data analysis device 2 visualizes a current discontinuity situation of a trajectory 40 extracted by the trajectory management server 3 for the user 15 (S1), and adjusts the trajectory connection parameter P1 according to a user operation (S3). As a result, the occurrence of discontinuity in a trajectory 40 extracted using the trained image recognition model M1 in the workplace 10 can be suppressed well by reflecting analysis performed by the user 15.

### 2-2-1. Discontinuity Visualization Process

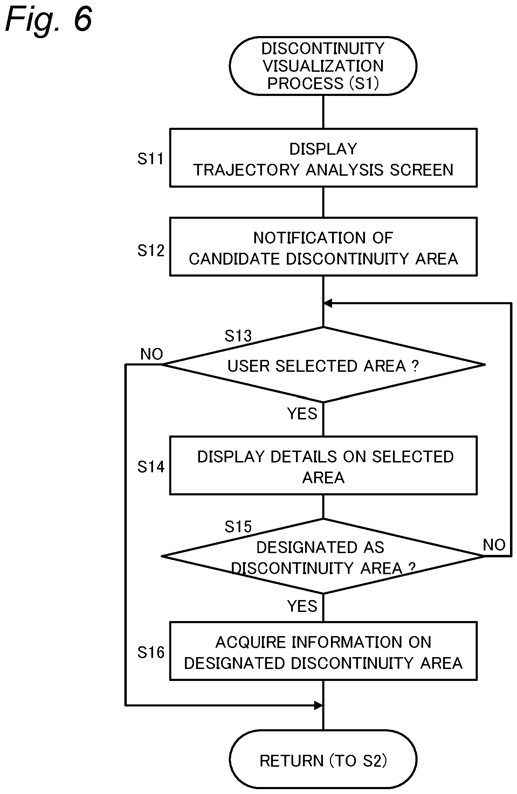

Details of the discontinuity visualization process in step S1 in Fig. 5 will be described with reference to Figs. 6 to 8.

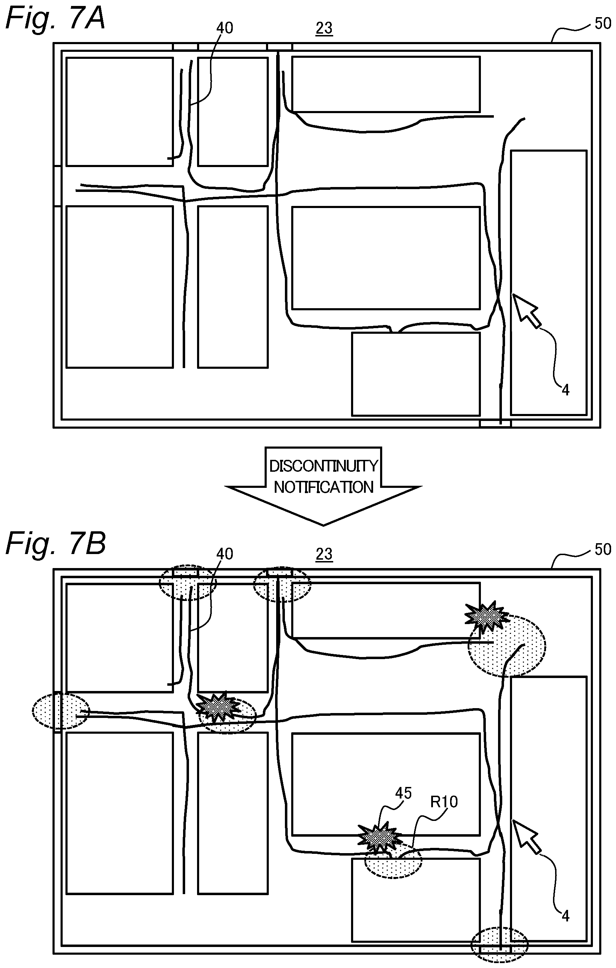

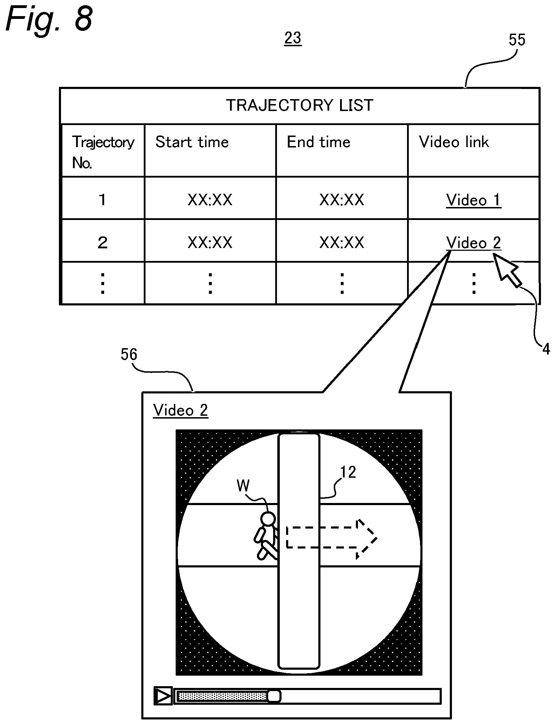

Fig. 6 is a flowchart illustrating the discontinuity visualization process (S1 in Fig. 5) in the data analysis device 2. Figs. 7A and 7B illustrate display examples of a trajectory analysis screen in the data analysis device 2. Fig. 8 illustrates a display example of detailed information in the data analysis device 2.

First, for example, the processor 20 acquires the trajectory data D1 for a predetermined period (e.g., one day) to be analyzed from the trajectory management server 3 via the network I/F 25, and causes the display 23 to display the trajectory analysis screen including the trajectory 40 indicated by the acquired trajectory data D1 (S11). A display example of step S11 is illustrated in Fig. 7A.

In exemplary step S11, the trajectory management server 3 transmits the trajectory data D1 to the data analysis device 2 together with the map information D2, for example, wherein the trajectory data D1 is a result that the trajectory extraction module 33 extracts the trajectory 40 from a detection result by the image recognition model M1, based on the current trajectory connection parameter P1. For example, as illustrated in Fig. 7A, the display 23 of the data analysis device 2 displays the trajectory analysis screen in which the trajectory 40 indicated by the acquired trajectory data D1 is overlayed on the workplace map 50 of the map information D2. The map information D2 may be stored in advance in the memory 21 of the data analysis device 2.

Next, on the trajectory analysis screen of Fig. 7A, the processor 20 displays a notification of candidates presumed to be a discontinuity area R1 to the user 15, for example (S12). A display example of step S12 is illustrated in Fig. 7B.

In exemplary step S12, based on the acquired trajectory data D1, the processor 20 first detects, as a candidate discontinuity area R10, an area in which a starting end of a fragment and an ending end of a fragment of the trajectory 40 are adjacent to each other within a predetermined distance in the map information D2 and the number of the adjacent starting and ending ends is a predetermined number or larger. The predetermined distance and the predetermined number are set in advance as criteria for determining that ends of fragments of the trajectory 40 are concentrated, for example.

Furthermore, in step S12, the processor 20 excludes an area corresponding to a doorway of the workplace 10 in candidate discontinuity areas R10 detected as described above from notification targets with reference to the map information D2, for example. An exclusion target is not limited to the above, and can be set to various areas in which starting and ending ends of fragments of the trajectory 40 are presumed to be located regardless of discontinuity of the trajectory 40. The exclusion target may include an end area of a viewing angle range of the camera 11 or a detection range of the system 1, for example.

The processor 20 detects, as a notification target, a remaining candidate discontinuity area R10 that is not excluded as described above. For example, as illustrated in Fig. 7B, the processor 20 causes the display 23 to display the candidate discontinuity area R10 detected as the notification target with a notification marker 45 (S12). The notification marker 45 is a marker for notifying the user 15 of the candidate for a discontinuity area R1.

The notification marker 45 may be displayed as various icons, or may be various highlighting with which the candidate discontinuity area R10 is displayed, such as highlight color, hatching, or blinking. In the notification in step S12, the marker does not need to be displayed in particular, and only the candidate discontinuity area R10 as the notification target may be displayed.

For example, with the trajectory analysis screen of Fig. 7B being displayed, the processor 20 receives various user operations via the operation interface 22, and determines whether or not the candidate for a discontinuity area R1 is selected by the user operation (S13). For example, the user 15 can input, to the operation interface 22, an operation of selecting a desired candidate discontinuity area R10 with a pointer 4 from the candidate discontinuity areas R10 in the notification on the trajectory analysis screen of Fig. 7B.

When a candidate discontinuity area R10 is selected by the user operation (YES in S13), the processor 20 causes the display 23 to display detailed information on the selected candidate discontinuity area R10 (S14). The detailed information includes various information for causing the user 15 to check a situation where the discontinuity has occurred in the trajectory 40 in the workplace 10. A display example of step S14 is illustrated in Fig. 8.

In the example of Fig. 8, the display 23 displays a trajectory list 55 and a trajectory video 56, which are examples of the detailed information of the candidate discontinuity area R10 selected by the user operation in step S13. For example, the trajectory list 55 enumerates, for each fragment of the trajectory 40 whose end is located within a range of the candidate discontinuity area R10, various information on the fragment of the trajectory 40 in association with each other. For example, the trajectory video 56 is a video of the candidate discontinuity area R10 imaged during a period of time associated with one of the fragments of the trajectory 40 in the trajectory list 55.

The various information in the trajectory list 55 include, for example, "trajectory No." that is an identification number of a fragment of the trajectory 40, "start time" that is time corresponding to the starting end of the fragment of the trajectory 40, "end time" that is time corresponding to the ending end of the fragment of the trajectory 40, and "video link" that is link information associated with a trajectory video 56 of the fragment of the trajectory 40. The trajectory list 55 may include information indicating whether the end of a fragment of the trajectory 40 located in the candidate discontinuity area R10 is the starting end or the ending end. For example, one of the "start time" and the "end time" may be highlighted, or only one of them may be displayed.

Fig. 8 illustrates an example of inputting, to the operation interface 22, a user operation of designating the video link of the trajectory No. 2 with a pointer 4 from the trajectory list 55. When the video link is designated, the processor 20 acquires the corresponding video data D0 from the trajectory management server 3, for example, to play the trajectory video 56. For example, the trajectory video 56 is played from the vicinity of time at which the corresponding fragment of the trajectory 40 is located in the selected candidate discontinuity area R10.

The various detailed information as described above is displayed on the display 23 in response to a user operation in a pop-up or the like on the trajectory analysis screen (S14). The user 15 can check the information on the trajectory analysis screen and the various detailed information, and thereby specify whether discontinuity has occurred in the trajectory 40 or various situations such as a factor of the discontinuity in the candidate discontinuity area R10 selected in step S13.

For example, the processor 20 determines whether or not the selected candidate discontinuity area R10 is designated as the discontinuity area R1 by a user operation, based on the user operations on the operation interface 22 (S15). The target user operation in step S15 may be an operation of designating a range of a portion considered by the user 15 to have discontinuity in the candidate discontinuity area R10 with the pointer 4 or the like on the workplace map 50 or the trajectory video 56. Alternatively, the target user operation may be an operation of overall designating the selected candidate discontinuity area R10, an operation of clicking the notification marker 45, or the like.

When the discontinuity area R1 is designated by the user operation (YES in S15), the processor 20 acquires information indicating the discontinuity area R1 designated by the user operation (S16), and ends the discontinuity visualization process (S1 in Fig. 5). In this case, the processor 20 proceeds to YES in step S2 in Fig. 5.

On the other hand, when no discontinuity area R1 is designated by the user operation (NO in S15), the processor 20 performs the processes of step S13 and subsequent steps again, for example. For example, in a case where the user 15 confirms that no discontinuity has occurred in the candidate discontinuity area R10 selected once, the user 15 can newly select another candidate discontinuity area R10 (S13).

For example, when no candidate discontinuity area R10 is selected by the user operation (NO in S13), without particularly acquiring information indicating a discontinuity area R1 (S16), the processor 20 ends the discontinuity visualization process (S1 in Fig. 5). In this case, the processor 20 proceeds to NO in step S2 in Fig. 5.

According to the above discontinuity visualization process (S1 in Fig. 5), the data analysis device 2 can visualize a current discontinuity situation of a trajectory 40 for the user 15 by generating the various display information illustrated in Figs. 7A to 8, for example.

### 2-2-2. Parameter Adjustment Process

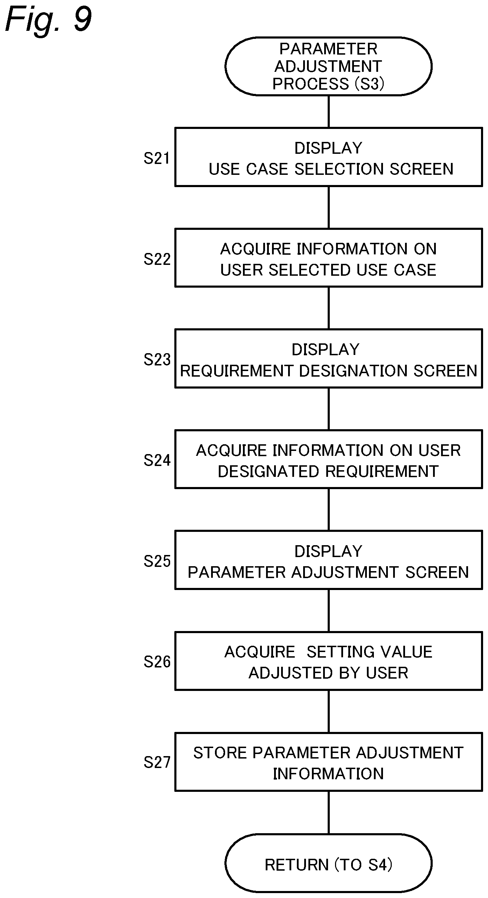

The parameter adjustment process in step S3 in Fig. 5 will be described with reference to Figs. 9 to 12.

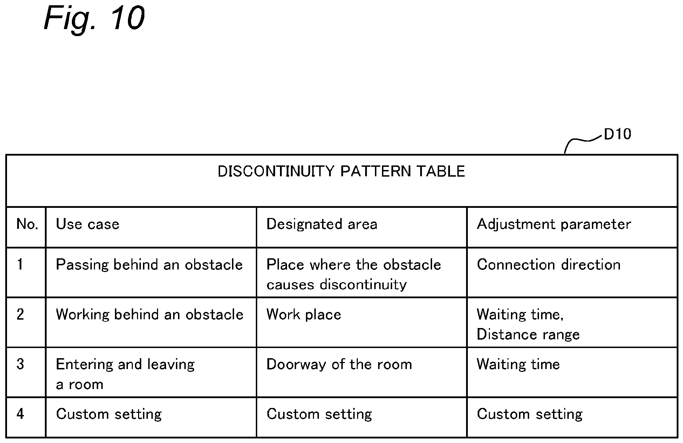

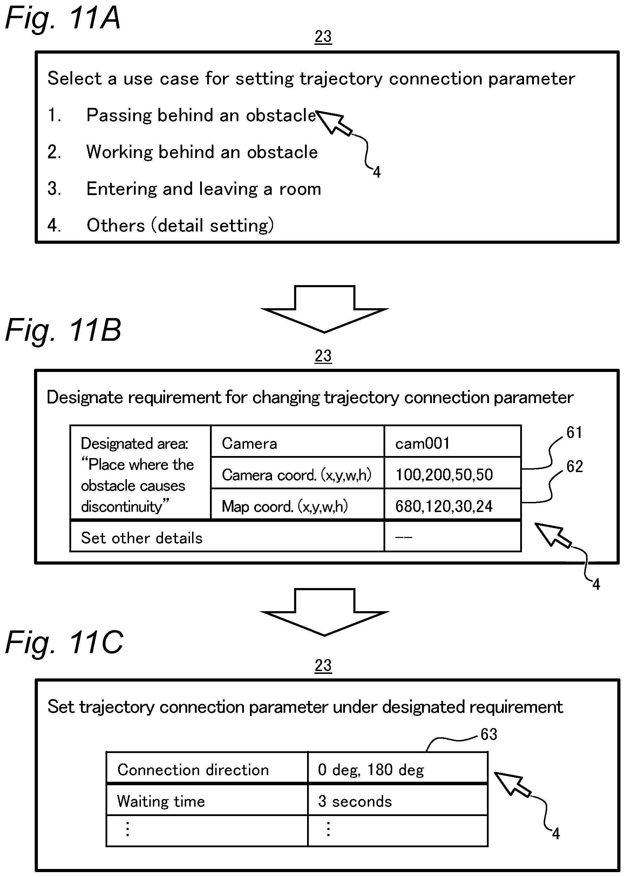

Fig. 9 is a flowchart illustrating the parameter adjustment process (S3 in Fig. 5) in the data analysis device 2. Fig. 10 illustrates a discontinuity pattern table D10 in the data analysis device 2. Figs. 11A to 11C illustrate display examples of the parameter adjustment process.

For example, the process illustrated in Fig. 9 is performed using, the discontinuity pattern table D10 stored in advance in the memory 21 of the data analysis device 2. The discontinuity pattern table D10 illustrated in Fig. 10 manages "No." for identifying each pattern in a plurality of patterns, and corresponding "use case", "designated area", and "adjustment parameter" in association with each other. The designated area is an example of a requirement for change of the trajectory connection parameter P1 to apply in the pattern, and indicates a place where discontinuity is presumed to occur in the corresponding use case, for example. The adjustment parameter indicates a type of the trajectory connection parameter P1 presumed to be adjusted in the pattern.

For example, in the discontinuity pattern table D10 of Fig. 10, the pattern of No. 1 corresponds to the use case of "passing behind an obstacle" (see Figs. 4B and 8), and includes the designated area of "place where discontinuity occurs due to the obstacle" and the adjustment parameter of "connection direction". The pattern of No. 2 corresponds to the use case of "working behind an obstacle" (see Fig. 4C), and includes the designated area of "work place" and the adjustment parameters of "waiting time" and "distance range". The pattern of No. 3 corresponds to the use case of "entering and leaving a room", and includes the designated area of "doorway of the room" and the adjustment parameter of "waiting time". The pattern of No. 4 indicates a custom setting in which the user 15 can set each item, for example.

In the example of Fig. 9, the data analysis device 2 guides the user 15 by sequentially displaying the screens of Figs. 11A to 11C in a dialog box or the like using the discontinuity pattern table D10, in addition to displaying the trajectory analysis screen and the detailed information of Figs. 7A to 8, for example.

Specifically, the processor 20 of the data analysis device 2 first controls the display 23 to display a screen for presenting the user 15 with options for the use case of the discontinuity area R1 under adjustment designated in step S16 in Fig. 6 (S21). A display example of step S21 is illustrated in Fig. 11A.

The use case selection screen illustrated in Fig. 11A includes a message prompting the user 15 to select a use case, and a plurality of use cases as the options. For example, the processor 20 causes the display 23 to display the use case selection screen (S21) with reference to the use cases of the patterns in the discontinuity pattern table D10, to receive a user operation via the operation interface 22.

The user 15 can input, to the operation interface 22, an operation of selecting a use case option suitable for the discontinuity area R1 under adjustment from the plurality of use case options, with checking information such as the trajectory video 56. For example, in the example of Fig. 8 (and Fig. 4B), the use case of No. 1 is selected. The processor 20 acquires information of the selected use case, based on the user operation on the operation interface 22 (S22).

Next, the processor 20 causes the display 23 to display a screen for designating the requirement for change of the trajectory connection parameter P1 to apply according to the acquired information of the use case and the like (S23). A display example of step S23 is illustrated in Fig. 11B.

Fig. 11B illustrates a case where the use case of No. 1 is selected in Fig. 11A. The requirement designation screen in the example of Fig. 11B includes a message prompting the user 15 to designate a requirement, a portion for setting the designated area, and a portion for setting other requirements. The portion for setting the designated area includes identification information of the camera 11 in the system 1, an input field 61 for the designated area in the camera coordinates of the camera 11, and a corresponding input field 62 for the designated area in the map coordinates. In this example, the designated area is designated by a horizontal position x, a vertical position y, a width w, and a height h in the respective coordinate systems in the input fields 61 and 62.

For example, in step S23, the processor 20 sets, on the requirement designation screen, the designated area corresponding to the use case acquired in step S22 in the discontinuity pattern table D10. The processor 20 specifies the camera 11 that captures images of the discontinuity area R1 designated in step S16 in Fig. 6, and displays the position of the discontinuity area R1 designated in step S16 in the camera coordinates of the specified camera 11 as initial values of the input fields 61 and 62.

For example, the user 15 can input an operation of designating a range to which the adjustment of the trajectory connection parameter P1 is to be applied in detail to the input field 61 for the camera coordinates when checking the trajectory video 56. For example, the user 15 can input the position and size of the designated area in the camera coordinates such that a place where the X obstacle 12 causes discontinuity is surrounded by a rectangle or the like. The processor 20 acquires information of the designated requirement such as the designated area, based on the user operation on the operation interface 22 during display of the requirement designation screen (S24).

The above user operation may be input to the input field 62 for the map coordinates. The processor 20 appropriately calculates coordinate transformation between the camera coordinates and the map coordinates so that the input fields 61 and 62 indicate the same position. The processor 20 may cause the display 23 to highlight the input designated area on the workplace map 50 on the trajectory analysis screen or the trajectory video 56. The processor 20 may receive, via the operation interface 22, a user operation of inputting the designated area with the pointer 4 or the like on the workplace map 50 or the trajectory video 56.

For example, the processor 20 causes the display 23 to display a screen for setting the trajectory connection parameter P1 according to the acquired information of the use case and the like (S25). A display example of step S25 is illustrated in Fig. 11C.

Fig. 11C illustrates the parameter adjustment screen subsequent to Fig. 11B. The parameter adjustment screen in the example of Fig. 11C includes a message prompting setting of the trajectory connection parameter P1, a portion for setting the adjustment parameter of the selected use case among the various trajectory connection parameters P1, and a portion for setting other parameters. The portion for setting each parameter P1 includes an input field 63 for inputting a setting value that is an adjustment result.

For example, in step S25, the processor 20 controls the display 23 to display the parameter adjustment screen with reference to the discontinuity pattern table D10, for example. For example, the processor 20 acquires a current setting value of each parameter P1 via data communication with the trajectory management server 3 to display the setting value in the input field 63 as an initial value.

In order to adjust a desired trajectory connection parameter P1, the user 15 can input a user operation of changing the setting value from the initial value displayed in the corresponding input field 63. The processor 20 acquires the setting value of the trajectory connection parameter P1 that is the adjustment result, based on the user operation on the operation interface 22 during display of the parameter adjustment screen (S26).

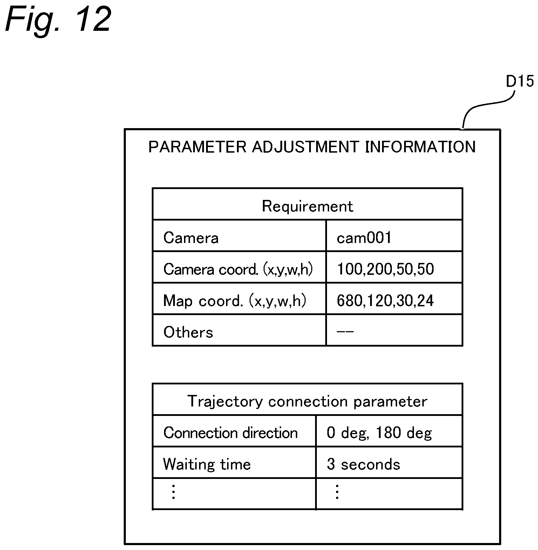

Based on the information obtained by the various user operations described above, the processor 20 stores parameter adjustment information indicating the adjustment results of the trajectory connection parameter P1 (S27). The parameter adjustment information in step S27 is illustrated in Fig. 12.

Fig. 12 illustrates parameter adjustment information D15 corresponding to the adjustment results of Figs. 11A to 11C. For example, the processor 20 associates the requirement such as the designated area acquired in step S24 with the setting value of the trajectory connection parameter P1 acquired in step S26 to generate the parameter adjustment information D15, and stores the parameter adjustment information D15 in the memory 21 (S27). The processor 20 may add the information of the use case acquired in step S22 and the like in the parameter adjustment information D15.

The processor 20 ends the parameter adjustment process (S3 in Fig. 5) by storing the parameter adjustment information D15 (S27).

According to the parameter adjustment process (S3 in Fig. 5) described above, the data analysis device 2 presents various information that prompts the user 15 to adjust the trajectory connection parameter P1, and obtains the parameter adjustment information D15 of the adjustment results reflecting the intention of the user 15 (S27). In subsequent step S4, the processor 20 transmits the stored parameter adjustment information D15 to the trajectory management server 3. Accordingly, subsequent generation of the trajectory data D1 by the trajectory management server 3 is controlled.

When receiving the parameter adjustment information D15, the trajectory management server 3 refers to the received parameter adjustment information D15 at the time of the subsequent operation of the trajectory extraction module 33. Specifically, the trajectory extraction module 33 determines whether or not the requirement in the received parameter adjustment information D15 is satisfied. When the requirement is satisfied, the trajectory extraction module 33 extracts the trajectory 40 using the setting value that is the adjustment result of the trajectory connection parameter P1 in the parameter adjustment information D15. On the other hand, when the requirement is not satisfied, the trajectory extraction module 33 does not use the setting value that is the adjustment result, but uses the setting value before adjustment.

In this way, the system 1 can generate the trajectory data D1 in which the discontinuity of the trajectory 40 is eliminated in the discontinuity area R1 designated by the user 15. The trajectory extraction module 33 may use the trajectory connection parameter P1 for connecting fragments of the trajectory 40 again after the trajectory 40 is extracted or the fragments thereof are connected once. In this case, similarly to the above, whether or not to use the setting value that is the adjustment result depends on whether or not the corresponding requirement is satisfied.

According to the parameter adjustment process described above, the use case or the like related to the discontinuity of the trajectory 40 is used to guide the user 15 to adjust the trajectory connection parameter P1, which leads to facilitating the parameter adjustment by the user 15.

For example, in the example of Figs. 4B and 8, the user 15 selects the use case of passing behind an obstacle 12 in step S22 (Fig. 11A). As a result, in subsequent steps S23 and S25, as illustrated in Figs. 11B and 11C, the user 15 is guided to input the portion where the discontinuity occurs in the trajectory 40 due to the obstacle 12 as the designated area and to set the connection direction that is the corresponding adjustment parameter.

In the example of Fig. 4C, by selecting the use case of working behind an obstacle 12, the user 15 is guided to set the distance range according to a hidden range of a work place and to set the waiting time according to work time at the work place. As described above, it is possible to facilitate adjusting the trajectory connection parameter P1 appropriately according to the use case selected by the user 15.

With the guidance as described above, the user 15 can adjust not only the adjustment parameter corresponding to the selected use case, but also another trajectory connection parameter P1 such as waiting time for passing behind the obstacle 12 as illustrated in Fig. 11C, for example (S25 and S26).

The requirement set in steps S23 and S24 are not limited to the designated area, and another requirement may be set. For example, in the data analysis device 2, time information for applying the change of the trajectory connection parameter P1 may be set, so that the adjustment result is applied only in a specific period of time, for example. Alternatively, personal identification or various attributes of the worker W may be set as the requirement. The processor 20 receives a user operation of designating various requirements as described above on the requirement designation screen of Fig. 11B (S24), for example, to add information of the designated requirements in the parameter adjustment information D15 (S27). With reference to the requirements of the parameter adjustment information D15, the trajectory management server 3 can selectively apply the trajectory connection parameter P1 depending on various requirements that are satisfied.

### 3. Summary

As described above, the data analysis device 2 according to the present embodiment controls generation of a trajectory 40 as an example of a data string indicating a detection result of a worker W as an example of an object having been detected in chronological order in a field such as a workplace 10. The data analysis device 2 includes the display 23, the operation interface 22 as an example of the input interface, and the processor 20. The display 23 displays information. The operation interface 22 receives a user operation. The processor 20 controls the trajectory management server 3 as an example of the data controller that manages the detection result of the object and generates the data string. The processor 20 causes the display 23 to display various display information including a discontinuity area R1 or a candidate discontinuity area R10 as an example of an adjacency range in which ends of a plurality of fragments of the trajectory 40 are adjacent to each other in the workplace 10 at an interval corresponding to discontinuity of the trajectory 40, for example (S1, see Figs. 7A and 7B, etc.). In this range, ends of fragments of the trajectory 40 are adjacent to each other at an interval that is presumed to be determined as discontinuity of the trajectory 40. The processor 20 receives, via the operation interface 22, a user operation of adjusting the trajectory connection parameter P1 as an example of a parameter indicating a condition for the plurality of fragments of the trajectory 40 to be connected to each other in the discontinuity area R1 (S3). The processor 20 controls the trajectory management server 3 to apply the adjusted trajectory connection parameter P1 in the discontinuity area R1 according to the user operation on the operation interface 22 (S4).

According to the data analysis device 2 described above, the discontinuity area R1 or the like is visualized for the user 15 and the trajectory connection parameter P1 is adjusted by a user operation, which makes it possible to easily suppress the occurrence of discontinuity in the trajectory 40 of the worker W having been detected in chronological order in the workplace 10.

In the data analysis device 2 of the present embodiment, the processor 20 receives, via the operation interface 22, a user operation of designating a requirement for the adjusted trajectory connection parameter P1 to apply in the discontinuity area R1 (S24). For example, according to the parameter adjustment information D15, the processor 20 controls the trajectory management server 3 not to apply the adjusted trajectory connection parameter P1 when the designated requirement is not satisfied, and to apply the adjusted trajectory connection parameter P1 when the designated requirement is satisfied (S4). As a result, the adjustment of the trajectory connection parameter P1 can be applied to the limited range intended by the user 15, and the occurrence of discontinuity in the trajectory 40 can be suppressed with high accuracy.

In the data analysis device 2 of the present embodiment, on the basis of the trajectory 40 generated by the trajectory management server 3, the processor 20 detects the adjacency range in which ends of fragments of the trajectory 40 are adjacent as a candidate discontinuity area R10 as an example of a candidate for discontinuity of the trajectory 40, and provides a notification of the detected candidate discontinuity area R10 with a notification marker 45 or the like that is display information (S12). Consequently, the user 15 is notified of the candidate discontinuity area R10 detected by the data analysis device 2, which makes it possible to easily suppress the occurrence of discontinuity in the trajectory 40.

In the data analysis device 2 of the present embodiment, the processor 20 receives, via the operation interface 22, a user operation of designating the candidate discontinuity area R10 in the display information on the trajectory analysis screen or the like (S13). The processor 20 causes the display 23 to display detailed information on a fragment of the trajectory 40 of which an end is located in the designated candidate discontinuity area R10 (S14, see Fig. 8). This allows the user 15 to easily analyze a discontinuity situation in detail.

In the present embodiment, the data analysis device 2 further includes the memory 31 that stores the discontinuity pattern table D10 as an example of pattern information including a plurality of patterns in which the worker W is not detected in the workplace 10. The processor 20 receives, via the operation interface 22, a user operation of selecting one pattern from the plurality of patterns indicated by the discontinuity pattern table D10 (S22), and causes the display 23 to display information that prompts the user to adjust the trajectory connection parameter P1 according to the selected pattern (S23 and S25). As a result, the user 15 is guided to adjust the parameter, which makes it possible to easily suppress the occurrence of discontinuity in the trajectory 40.

In the present embodiment, the trajectory management server 3 causes the trajectory extraction module 33 to manage detection results from the image recognition model M1 that detects the worker W on the basis of a captured image of the workplace 10, and to generate the trajectory 40 by sequentially connecting the detection results from the image recognition model M1 on the basis of the trajectory connection parameter P1. By adjusting the trajectory connection parameter P1 applied in this way, the data analysis device 2 can control the generation of the trajectory 40 to suppress the occurrence of discontinuity in the trajectory 40.

In the present embodiment, the data analysis device 2 further includes the network I/F 25 as an example of the communication interface that performs data communication with the trajectory management server 3. The processor 20 receives the trajectory data D1 of the trajectory 40 from the trajectory management server 3 via the communication interface (S11), and transmits the parameter adjustment information D15 of the adjusted trajectory connection parameter P1 to the trajectory management server 3 via the communication interface (S4). Such data communication allows the data analysis device 2 to control the externally configured data controller to suppress the occurrence of discontinuity in the trajectory 40.

In the data analysis device 2 of the present embodiment, the data string is the trajectory 40 indicating the detection result of the worker W having moved on the workplace map 50 showing the workplace 10. The data analysis device 2 of the present embodiment can easily suppress the occurrence of discontinuity in such a data string.

In the present embodiment, there is provided a data analysis method of controlling generation of a data string indicating a detection result of an object having been detected in chronological order in a field such as the workplace 10. The data string is generated by the trajectory management server 3 that manages the detection result of the object. The method includes step S1 of causing the display 23 to display display information including an adjacency range in which ends of a plurality of fragments of the data string are adjacent to each other in the workplace 10, step S3 of receiving, via the operation interface 22, a user operation of adjusting a parameter indicating a condition for the plurality of fragments of the data string to be connected to each other in the adjacency range, and step S4 of controlling the trajectory management server 3 to apply the adjusted parameter in the adjacency range according to the user operation on the operation interface 22.

In the present embodiment, there is provided a program for causing the processor 20 of the computer to execute the above data analysis method. According to the data analysis method of the present embodiment, it is possible to easily suppress the occurrence of discontinuity in a data string of an object having been detected in chronological order in a field.

### (Other Embodiments)

The first embodiment has been described above as the examples of the technique disclosed in this application. However, the technique in the present disclosure is not limited thereto, and is applicable also to embodiments in which changes, replacements, additions, omissions and the like are made as appropriate. A new embodiment can be made by combining the components described in the above embodiments. Therefore, other embodiments will be exemplified below.

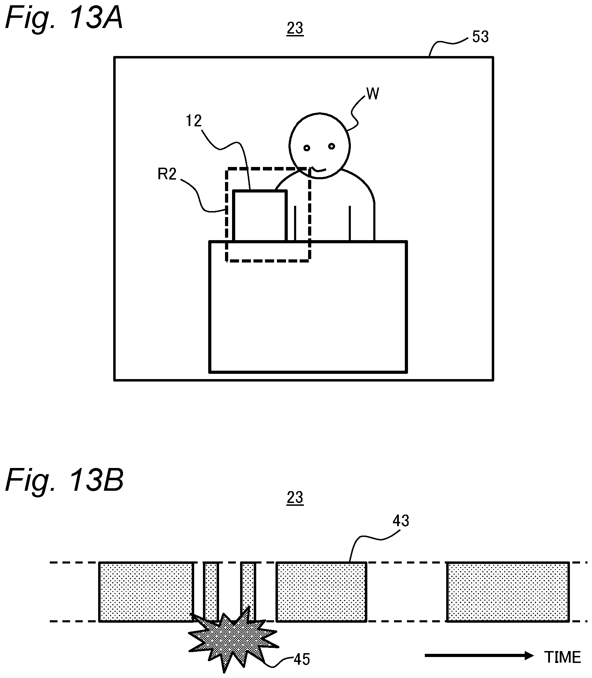

In the first embodiment, the trajectory 40 along which the worker W has moved has been described as an example of the data string in the data analysis device 2. A data analysis device 2 of the present embodiment may handle not only the trajectory 40 but also various data strings. Such a modification example will be described with reference to Figs. 13A and 13B.

Figs. 13A and 13B are diagrams for describing the modification example of the data analysis device 2. The data analysis device 2 of the present modification example is applied to a system that analyzes efficiency or the like with which a worker W works. Fig. 13A illustrates a captured image 53 captured by a camera 11 in the system. Fig. 13B illustrates a timeline 43 as an example of a data string in the system.

In the system of the example of Fig. 13, the camera 11 is installed such that a place where an individual worker W works appears in the captured image 53, for example. An image recognition model M1 of the present modification example detects a state in which the worker W has performed a predetermined task in the captured image 53. The predetermined task can be set to various tasks, and may be a task of holding or wrapping an object, or writing a character or the like. The system includes a data controller that generates a timeline 43 on the basis of the detection result from the image recognition model M1, instead of the trajectory extraction module 33 or the trajectory management server 3 of the first embodiment, for example. The timeline 43 is an example of a data string formed by arranging the presence or absence of the detection result of the predetermined task having been performed by the worker W in time order.

In the example of Fig. 13A, when the worker W performs the predetermined task in an image area R2 in the vicinity of an obstacle 12 located between the camera 11 and the worker W, the image recognition model M1 may fail to detect this state. As illustrated in Fig. 13B, it is expected that discontinuity occurs in the timeline 43 due to the detection failure.

In this case, the detection result corresponding to each end of discontinuous fragments of the timeline 43 is obtained in the image area R2 in the vicinity of the obstacle 12. Thus, it is considered that the above discontinuity can be eliminated by causing the data controller to perform interpolation between the ends for connecting the discontinuous fragments of the timeline 43. For example, regarding the detection result in the image area R2, it is considered that the discontinuity of the timeline 43 can be eliminated by adjusting a parameter for extending waiting time that allows connection in the occurrence of the discontinuity in the timeline 43 is extended or for widening an allowable range of a connection direction in the image area R2.

Therefore, the data analysis device 2 of the present modification example visualizes such a situation in a field for the user 15 as in the first embodiment, and performs parameter adjustment reflecting the analysis performed by the user 15. For example, in the same operation as in the first embodiment (Fig. 5), a processor 20 of the present modification example detects discontinuity of the timeline 43 in the discontinuity visualization process (S1), and visualizes the discontinuity of the timeline 43 for the user 15 by displaying a notification marker 45 or the like.

The processor 20 of the present modification example causes the display 23 to display the captured image 53 during a corresponding period of time in response to a user operation of designating the notification marker 45 or the like of the discontinuity of the timeline 43 as in steps S13 and S14 in Fig. 6, for example. For example, in the parameter adjustment process (S3 in Fig. 5), the processor 20 receives, via the operation interface 22, a user operation of designating the image area R2 as a designated area to which the parameter adjustment is applied and a user operation of adjusting the various parameters. This allows the data analysis device 2 of the present modification example to reflect the intention of the user 15 for suppressing the occurrence of discontinuity in a data string such as the timeline 43 as in the first embodiment.

The data analysis device 2 of the present modification example may be applied to a system that analyzes both a timeline 43 and a trajectory 40 as described above. For example, a timeline 43 for work performed by a worker W and a trajectory 40 for movement of the worker W may be analyzed.

As described above, in the data analysis device 2 of the present embodiment, a data string may include at least one of a trajectory 40 along which an object has moved in a field and a timeline 43 indicating a detection result of the object in time order. The data analysis device 2 of the present embodiment can easily suppress the occurrence of discontinuity in various data strings.

In the above embodiments, an example has been described in which the data controller is an external component of the data analysis device 2, such as the trajectory management server 3. In the present embodiment, the data controller may be an internal component of the data analysis device 2. For example, the data analysis device 2 may include a trajectory extraction module 33. In this case, in step S4 in Fig. 5, the data analysis device 2 controls the generation of the trajectory data D1 so as to reflect the adjustment result by setting the parameter adjustment information D15 in the internal trajectory extraction module 33.

In the above embodiments , the parameters for connecting fragments of a data string, such as the trajectory connection parameter P1, have been exemplified. In the data analysis device 2 of the present embodiment, the parameters for connecting fragments of a data string are not limited to the above, and various parameters can be adopted. For example, in a case where a connection destination of a fragment of a trajectory is determined using various scores as in the method disclosed in Patent Document 1 in the system 1, threshold values for such scores or the like may be adopted as the parameters. As in the above embodiments, appropriate guidance is provided so that such parameters can reflect analysis performed by the user 15, and it is thus possible to easily suppress the occurrence of discontinuity in a trajectory or the like.

In the above embodiments, the worker W has been described as an example of the object in the data analysis device 2, but the object is not particularly limited thereto. In the data analysis device 2 of the present embodiment, the object may be a person who is not the worker W. The object is not limited to a person and may be various moving bodies such as a living being, various vehicles, or robots. In addition, the object is not limited to a moving body, and may be various objects or states of an object.

In the above embodiments, the workplace 10 has been illustrated as an example of the field to which the data analysis device 2 is applied. The data analysis device 2 of the present embodiment can be applied not only to the workplace 10 but also to various fields, and can be used for analysis of a data string for detection results of various objects in the fields.

The embodiments are described above as the example of the technique in the present disclosure. For this reason, the accompanying drawings and detailed description are provided.

Therefore, the components described in the accompanying drawings and the detailed description may include not only the components essential for solving the problem but also the components not essential for solving the problem for illustrating the above-mentioned technique. Therefore, it should not be immediately construed that these components that are not essential are essential even if the unessential components are described in the accompanying drawings and the detailed description.

Further, since the above-described embodiments are for exemplifying the technique in the present disclosure, various changes, replacements, additions, omissions and the like can be made within the scope of claims or their equivalents.

The present disclosure is applicable for analyzing a data string indicating a detection result of various objects having been detected in chronological order in various fields, and is applicable for analyzing a trajectory or the like of a moving body, for example.

## Claims

1. A data analysis device for controlling generation of a data string indicating a detection result of an object detected in time sequence in a field, the data analysis device comprising:
a display configured to display information;
an input interface configured to receive a user operation; and
a processor configured to control a data controller that manages the detection result of the object to generate the data string,
wherein the processor is configured to:
cause the display to display display information including an adjacency range in which ends of a plurality of fragments of the data string are adjacent to each other in the field;
receive the user operation to adjust a parameter via the input interface, the parameter indicating a condition for the plurality of fragments of the data string to be connected to each other in the adjacency range; and
control the data controller to apply the adjusted parameter in the adjacency range, according to the user operation on the input interface.

2. The data analysis device according to claim 1, wherein the processor is configured to:
receive, via the input interface, the user operation to designate a requirement for the adjusted parameter to apply in the adjacency range; and
control the data controller not to apply the adjusted parameter when the designated requirement is not satisfied, and to apply the adjusted parameter when the designated requirement is satisfied.

3. The data analysis device according to claim 1 or 2, wherein the processor is configured to:
detect the adjacency range as a candidate for discontinuity of the data string, based on the data string generated by the data controller; and
provide a notification of the detected adjacency range in the display information.

4. The data analysis device according to any one of claims 1 to 3, wherein the processor is configured to receive, via the input interface, the user operation to designate the adjacency range in the display information, and
cause the display to display detailed information on a fragment of the data string of which an end is located in the designated adjacency range.

5. The data analysis device according to any one of claims 1 to 4, further comprising a memory storing pattern information including a plurality of patterns in which the object is not detected in the field, wherein the processor is configured to:
receive, via the input interface, the user operation to select a pattern from the plurality of patterns indicated by the pattern information; and
cause the display to display information that prompts a user to adjust the parameter according to the selected pattern.

6. The data analysis device according to any one of claims 1 to 5, wherein the data controller is configured to:
manage detection results from an image recognition model that detects the object, based on a captured image of the field; and
generate the data string by sequentially connecting the detection results from the image recognition model based on the parameter.

7. The data analysis device according to any one of claims 1 to 6, further comprising a communication interface configured to communicate data with the data controller, wherein the processor is configured to:
receive the data string from the data controller via the communication interface; and
transmit the adjusted parameter to the data controller via the communication interface.

8. The data analysis device according to any one of claims 1 to 7, wherein the data string includes at least one of a trajectory indicating the detection result of the object moved on a map showing the field, or a timeline indicating the detection result of the object in time order.

9. A data analysis method of controlling generation of a data string indicating a detection result of an object detected in time sequence in a field, wherein
the data string is generated by a data controller that manages the detection result of the object,
the data analysis method comprising:
causing a display to display display information including an adjacency range in which ends of a plurality of fragments of the data string are adjacent to each other in the field;
receiving a user operation to adjust a parameter via an input interface, the parameter indicating a condition for the plurality of fragments of the data string to be connected to each other in the adjacency range; and
controlling the data controller to apply the adjusted parameter in the adjacency range according to the user operation on the input interface.

10. A program for causing a processor of a computer to execute the data analysis method according to claim 9.
